# EUROPÄISCHE PATENTSCHRIFT

(11) **EP 1 322 845 B1**
(45) Veröffentlichungstag und Bekanntmachung des Hinweises auf die Patenterteilung: **25.11.2009**
(21) Anmeldenummer: 01982377.2
(22) Anmeldetag: 28.09.2001
(51) Int. Cl.: F02B 29/04

(54) **LADELFUTKÜHLUNG FÜR EINE MEHRZYLINDRIGE BRENNKRAFTMASHINE MIT EINEM TURBOLADER**
CHARGE COOLING CIRCUIT FOR A MULTI-CYLINDER INTERNAL COMBUSTION ENGINE WITH A TURBO-SUPERCHARGER
REFROIDISSEMENT DE L'AIR DE SURALIMENTATION DANS UN MOTEUR A COMBUSTION INTERNE A PLUSIEURS CYLINDRES PRESENTANT UN TURBOCOMPRESSEUR

(30) Priorität: 05.10.2000 DE 10049314
(43) Veröffentlichungstag der Anmeldung: 02.07.2003
(73) Patentinhaber: AUDI AG, 85045 Ingolstadt (DE)
(72) Erfinder: REUSS, Thomas, 74196 Neuenstadt (DE)
(74) Vertreter: Mader, Wilfried
(86) Internationale Anmeldenummer: PCT/EP2001/011236
(87) Internationale Veröffentlichungsnummer: WO 2002/031329

(56) Entgegenhaltungen:
- EP-A- 0 522 471
- DE-A- 3 104 124
- DE-A- 19 547 884
- DE-C- 4 331 072
- FR-A- 1 535 728

## Beschreibung

Die vorliegende Erfindung betrifft eine Ladeluftkühlung für eine mehrzylindrige Brennkraftmaschine mit einem Turbolader, wobei die Ladeluft zu zwei separatin Ladeluftkühlern geführt wird.

Aus der Druckschrift DE 31 04 124 A1 ist ein Ladeluftkühler für ein Kraftfahrzeug mit einer aufgeladenen Brennkraftmaschine bekannt, wobei zur Reduzierung der Größe des Ladeluftkühlers ein Bypass mit einer Ventilanordnung vorgesehen ist, welche den Bypass in einem niedrigen Drehzahlbereich der Brennkraftmaschine sperrt.

Des weiteren ist in der Druckschrift DE 43 31 072 C1 ein Verfahren zur Beschleunigung der Motorerwärmung beschrieben, bei dem die Ladeluft in Abhängigkeit von der Kühlwassertemperatur und der Ladelufttemperatur über einen Ladeluftkühler oder über einen Bypass zu der Brennkraftmaschine geführt wird.

Herrschen hohe Ladelufttemperaturen vor, so ist bei den in diesen Druckschriften geoffenbarten Ladeluftkühlungen jedoch problematisch, dass die Fläche des Ladeluftkühlers möglichst groß sein muss, um eine ausreichende Kühlung zu leisten, was aufgrund der im Motorraum beengten Platzverhältnisse aber nur sehr schwer zu realisieren ist.

Schließlich ist aus der Druckschrift DE 195 47 994 A1 eine Brennkraftmaschine der V-Bauweise mit zwei parallel wirkenden Abgasturboladern bekannt, wobei von jedem der beiden Abgasturbolader eine Zuströmleitung zu einem von zwei nebeneinander angeordneten Ladeluftkühlern geführt ist und wobei von jedem der beiden Ladeluftkühler eine Rückströmleitung zu einer Ansauganlage geführt ist. Zur Schaffung eines schaltbaren Bypasses ist dort vorgesehen, dass jeweils die Zuströmleitung des einen Ladeluftkühlers mit der Rückstromleitung des anderen Ladeluftkühlers verbunden ist und dass diese Verbindung mit einer schaltbaren Bypassklappe ausgestattet ist.

Bei allen Ladeluftkühlungen aus den vorstehenden Druckschriften ist außerdem problematisch, dass die erzielbaren Kühlungsergebnisse nicht voll befriedigend sind

Aufgabe der vorliegenden Erfindung ist es, eine Ladeluftkühlung für eine mehrzylindrige Brennkraftmaschine mit einem Turbolader zu konzipieren, die im Motorraum günstig untergebracht werden kann und die gegenüber dem Stand der Technik eine verbesserte Kühlleistung aufweist.

Diese Aufgabe wird bei einer Ladeluftkühlung der eingangs genannten. Art erfindungsgemäß durch die Kennzeichnenden Merkmale des Patentanspruchs 1 gelöst.

Somit ist es möglich, anstelle von einem großen Ladeluftkühler zwei kleinere Ladeluftkühler vorzusehen und diese beiden Ladeluftkühler weitgehend unabhängig voneinander so anzuordnen, dass sie im Motorraum günstige Positionen einnehmen und sich gegenseitig nicht beeinträchtigen. Darüber hinaus kann die in zwei Strömungszweige aufgespaltete Ladeluft effektiver gekühlt werden, denn wie Experimente mit der erfindungsgemäßen Ladeluftkühlung gezeigt haben, wirkt sich die an unterschiedlichen Stellen beziehungsweise in unterschiedlicher Reihenfolge stattfindende Kühlung der beiden Strömungszweige besonders positiv aus.

Vorteilhaft weist der erste Ladeluftkühler einen Einlass für die Ladeluft auf, an den sich ein Luftkasten mit einer Verzweigungsstelle anschließt, wobei der erste Strömungszweig nach der Verzweigungsstelle über einen Kühlpass geleitet wird, der zweite Strömungszweig nach der Verzweigungsstelle über einen Bypass geleitet wird und die beiden Strömungszweige daraufhin zu zwei getrennten Auslässen des Kühlpasses und des Bypasses geführt sind.

Und der zweite Ladeluftkühler weist zu einer vorteilhaften Ausgestaltung der Erfindung zwei getrennte Einlässe für die beiden Strömungszweige auf an die sich ein Bypass und ein Kühlpass anschließen, wobei der erste Strömungszweig über den Bypass geleitet wird, der zweite Strömungszweig über den Kühlpass geleitet wird, die beiden Strömungszweige daraufhin innerhalb des Luftkastens zu einer Vereinigungsstelle geführt sind und sich an die Vereinigungsstelle ein Auslass für die Ladeluft anschließt.

Vorteilhaft sind der erste Ladeluftkühler und der zweite Ladeluftkühler spiegelsymmetrich zueinander ausgebildet. Denn auf diese Weise können die beiden Ladeluftkühler kostengünstig hergestellt werden.

Zweckmäßig führen die beiden Strömungszweige jeweils gleiche Ladeluftmengen, damit die beiden Strömungszweige im Bereich der Vereinigungsstelle etwa die gleiche Temperatur aufweisen, so dass die dem Ansaugsystem der Brennkraftmaschine zugeführte Ladeluft eine weitgehend homogene Temperaturverteilung besitzt.

Ebenfalls zweckmäßig sind die beiden Strömungszweige von der Verzweigungsstelle innerhalb des Luftkastens des ersten Ladeluftkühlers bis zu der Vereinigungsstelle innerhalb des Luftkastens des zweiten Ladeluftkühlers jeweils etwa gleich lang. Dadurch ist es einfacher, die beiden Strömungszweige gleich auszulegen.

Natürlich können die Verzweigungsstelle innerhalb des Luftkastens des ersten Ladeluftkühlers und/oder die Vereinigungsstelle innerhalb des Luftkastens des zweiten Ladekluftkühlers auch mit einem steuerbaren Element ausgestattet sein, so dass die Leistung der Ladeluftkühlung während der Kaltstartphase der Brennkraftmaschine reduzierbar ist. Denn mittels des steuerbaren Elements ist es möglich, die Ladeluft im wesentlichen ungekühlt, das heißt nur über die Bypässe zu dem Ansaugsystem der Brennkraftmaschine zu führen und die Ladeluft erst ab dem Erreichen einer bestimmten Temperatur effektiv zu kühlen.

Bevorzugt sind die sich zwischen den beiden Ladeluftkühlern erstreckenden beiden Strömungszweige zumindest teilweise als ein starres Doppelrohr ausgeführt, wobei die beiden Ladeluftkühler und das starre Doppelrohr jeweils mittels flexibler Druckschläuche miteinander verbunden sind. Somit kann die Ladeluft auch über eine relativ große Distanz innerhalb des Motorraums hinweggeführt werden, wobei die Verwendung von langen herabhängenden und damit leicht beschädigbaren Druckschläuchen vermieden wird.

In einer besonderen Ausführungsform sind die beiden Ladeluftkühler zu beiden Seiten der mehrzylindrigen Brennkraftmaschine im Motorraum - also an strömungsgünstigen Positionen - angeordnet. Und ist bei beiden Ladeluftkühlern der Kühlpass an der zu der Brennkraftmaschine zugewandten Seite angeordnet, während der Bypass an der von der Brennkraftmaschine abgewandten Seite der Brennkraftmaschine angeordnet ist, so ist diese Anordnung zudem in besonderer Weise auf den Einbau der Ladeluftkühler bei einer mehrzylindrigen Brennkraftmaschine in V-Bauweise abgestimmt.

Trägt der zweite Ladeluftkühler darüber hinaus im Bereich des Luftkastens einen Drucksensor, so kann durch Kontrolle des dort vorherrschenden Drucks und gegebenenfalls durch Ansteuerung des Turboladers der für den Betriebszustand der Brennkraftmaschine optimale Ladedruck eingestellt werden.

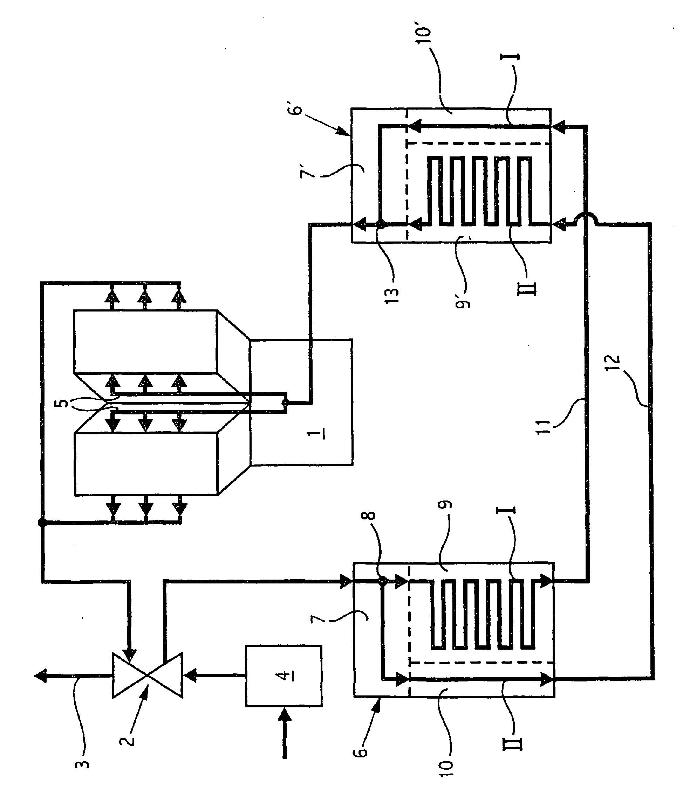

Die vorliegende Erfindung wird unter Bezugnahme auf die nachfolgende Zeichnungsfigur näher erläutert:
Die Figur zeigt die erfindungsgemäße Ladeluftkühlung für eine mehrzylindrige Brennkraftmaschine mit einem Turbolader.

Bei einer mehrzylindrigen Brennkraftmaschine 1, deren Zylinder V-förmig zueinander angeordnet sind, wird das Abgas über einen Turbolader 2 zu einem Abgassystem 3 geleitet.

Der so angetriebene Turbolader 2 verdichtet die über einen stromauf angeordneten Luftfilter 4 angesaugte Frischluft auf einen bestimmten Ladedruck, wodurch sich die Temperatur der Ladeluft erhöht.

Bevor die heiße Ladeluft nun dem Ansaugsystem 5 der Brennkraftmaschine 1 zugeführt werden kann, wird sie mittels eines ersten Ladeluftkühlers 6 und mittels eines zweiten Ladeluftkühlers 6' gekühlt. Dies geschieht, indem die gesamte Ladeluft zunächst dem ersten Ladeluftkühler 6 zugeführt wird, in dessen Luftkasten 7 eine Verzweigungsstelle 8 angeordnet ist, an der die Ladeluft in zwei Strömungszweige I, II aufgespaltet wird, wobei der erste Strömungszweig I über einen Kühlpass 9 innerhalb des ersten Ladeluftkühlers 6 geführt wird, während der zweite Strömungszweig II über einen Bypass 10 innerhalb des ersten Ladeluftkühlers 6 geführt wird. Daraufhin treten die beiden Strömungszweige I, II aus dem ersten Ladeluftkühler 6 aus und werden über getrennte Leitungen 11, 12 zum zweiten Ladeluftkühler 6' geführt. Diese Leitungen 11, 12 können zumindest teilweise von einem starren Doppelrohr gebildet werden, was die mechanische Stabilität der Anordnung erhöht. Im zweiten Ladeluftkühler 6' wird der erste Strömungszweig I über einen Bypass 10' geführt, während der zweite Strömungszweig II über einen Kühlpass 9' geführt wird. Stromab des Bypasses 10' und des Kühlpasses 9' werden die beiden Strömungszweige I, II dem Luftkasten 7' des zweiten Ladeluftkühlers 6' zugeführt, in dem eine Vereinigungsstelle 13 für die beiden Strömungszweige I, II angeordnet ist. Im Anschluss an den zweiten Ladeluftkühler 6' wird die gesamte Ladeluft über das Ansaugsystem 5 der Brennkraftmaschine 1 zugeführt.

Der erste und der zweite Ladeluftkühler 6, 6' sind an beiden Seiten der Brennkraftmaschine 1 angeordnet, da dies besonders strömungsgünstig ist und trotz der im Motorraum beengten Platzverhältnisse eine verhältnismäßig große Kühlfläche ermöglicht. Die beiden Kühlpässe 9, 9' sind dabei jeweils an der zu der Brennkraftmaschine 1 zugewandten Seite der Ladeluftkühler 6, 6' angeordnet und die beiden Bypässe 10, 10' sind dabei an der von der Brennkraftmaschine 1 abgewandten Seite der Ladeluftkühler 6, 6' angeordnet.

## Patentansprüche

1. Ladeluftkühlung für eine mehrzylindrige Brennkraftmaschine mit einem Turbolader, wobei die Ladeluft zu zwei separaten Ladeluftkühlern (6, 6') geführt wird,
**dadurch gekennzeichnet, dass** der erste Ladeluftkühler (6) die Ladeluft in zwei Strömungszweigen (I, II) aufteilt, den ersten der beiden Strömungszweige (I) effektiv kühlt und den zweiten der beiden Strömungszweige (II) im wesentlichen ungekühlt durchlaufen lässt , und wobei die beiden Strömungszweige danach dem zweiten Ladeluftkühler (6') zugeführt werden, der den ersten der beiden Strömungszweige (I) im wesentlichen ungekühlt durchlaufen lässt, den zweiten der beiden Strömungszweige (II) effektiv kühlt und die beiden Strömungszweige (I, II) anschließend wieder vereint.

2. Ladeluftkühlung nach Anspruch 1, **dadurch gekennzeichnet, dass** der erste Ladeluftkühler (6) einen Einlass für die Ladeluft aufweist, an den sich ein Luftkasten (7) mit einer Verzweigungsstelle (8) anschließt, wobei der erste Strömungszweig (I) nach der Verzweigungsstelle (8) über einen Kühlpass (9) geleitet wird, der zweite Strömungszweig (II) nach der Verzweigungsstelle (8) über einen Bypass (10) geleitet wird und die beiden Strömungszweige (I, II) daraufhin zu zwei getrennten Auslässen des Kühlpasses (9) und des Bypasses (10) geführt sind.

3. Ladeluftkühlung nach Anspruch 1 oder 2, **dadurch gekennzeichnet, dass** der zweite Ladeluftkühler (6') zwei getrennte Einlässe für die beiden Strömungszweige (I, II) aufweist an die sich ein Bypass (10') und ein Kühlpass (9') anschließen, wobei der erste Strömungszweig (I) über den Bypass (10') geleitet wird, der zweite Strömungszweig (II) über den Kühlpass (9') geleitet wird, die beiden Strömungszweige (I, II) daraufhin zu einem Luftkasten (7') mit einer Vereinigungsstelle (13) geführt sind und sich an die Vereinigungsstelle (13) ein Auslass für die Ladeluft anschließt.

4. Ladeluftkühlung nach einem der Ansprüche 1 bis 3, **dadurch gekennzeichnet, dass** der erste Ladeluftkühler (6) und der zweite Ladeluftkühler (6') spiegelsymmetrisch zueinander ausgebildet sind.

5. Ladeluftkühlung nach einem der Ansprüche 1 bis 4, **dadurch gekennzeichnet, dass** die beiden Strömungszweige (I, II) jeweils gleiche Ladeluftmengen führen.

6. Ladeluftkühlung nach einem der Ansprüche 2 bis 5, **dadurch gekennzeichnet, dass** die beiden Strömungszweige (I, II) von der Verzweigungsstelle (8) innerhalb des Luftkastens (7) des ersten Ladeluftkühlers (6) bis zu der Vereinigungsstelle (13) innerhalb des Luftkastens (7') des zweiten Ladetuftkühlers (6') jeweils etwa gleich lang sind.

7. Ladeluftkühlung nach einem der Ansprüche 2 bis 6, **dadurch gekennzeichnet, dass** die Verzweigungsstelle (8) innerhalb des Luftkastens (7) des ersten Ladeluftkühlers (6) und/oder die Vereinigungsstelle (13) innerhalb des Luftkastens (7') des zweiten Ladeluftkühlers (6') mit einem steuerbaren Element ausgestattet sind.

8. Ladeluftkühlung nach einem der Ansprüche 1 bis 7, **dadurch gekennzeichnet, dass** die sich zwischen den beiden Ladeluftkühlern (6, 6') erstreckenden beiden Strömungszweige (I, II) zumindest teilweise als ein starres Doppelrohr ausgeführt sind, wobei die beiden Ladeluftkühler (6, 6') und das starre Doppelrohr jeweils mittels flexibler Druckschläuche miteinander verbunden sind.

9. Ladeluftkühlung nach einem der Ansprüche 1 bis 8, **dadurch gekennzeichnet, dass** die beiden Ladeluftkühler (6, 6') zu beiden Seiten der mehrzylindrigen Brennkraftmaschine (1) im Motorraum angeordnet sind.

10. Ladekuftkühlung nach einem der Ansprüche 1 bis 9, **dadurch gekennzeichnet, dass** bei beiden Ladeluftkühlern (6, 6') der Kühlpass (9, 9') an der zu der Brennkraftmaschine (1) zugewandten Seite angeordnet ist, während der Bypass (10, 10') an der von der Brennkraftmaschine (1) abgewandten Seite angeordnet ist.

11. Ladeluftkühlung nach einem der Ansprüche 3 bis 10, **dadurch gekennzeichnet, dass** der zweite Ladeluftkühler (6') im Bereich des Luftkastens (7') einen Drucksensor trägt.

## Claims

1. Charge-air cooling for a multi-cylinder internal combustion engine with a turbocharger, the charge air being conducted to two separate charge-air coolers (6, 6'), **characterised in that** the first charge-air cooler (6) divides the charge air into two flow branches (I, II), effectively cools the first of the two flow branches (I) and allows the second of the two flow branches (II) to pass through in an essentially uncooled state, and **in that** the two flow branches are then fed to the second charge-air cooler (6') which allows the first of the two flow branches (I) to pass through in an essentially uncooled state, effectively cools the second of the two flow branches (II) and then combines the two flow branches (I, II) again.

2. Charge-air cooling according to claim 1, **characterised in that** the first charge-air cooler (6) has an inlet for the charge air to which an air receiver (7) with a branch point (8) is connected, the first flow branch (I) being conducted via a cooling pass (9) after the branch point (8), the second flow branch (II) being conducted via a bypass (10) after the branch point (8) and the two flow branches (I, II) then being conducted to two separate outlets of the cooling pass (9) and bypass (10).

3. Charge-air cooling according to claim 1 or claim 2, **characterised in that** the second charge-air cooler (6') has two separate inlets for the two flow branches (I, II) to which a bypass (10') and a cooling pass (9') are connected, the first flow branch (I) being conducted via the bypass (10'), the second flow branch (II) being conducted via the cooling pass (9'), the two flow branches (I, II) then being conducted to an air receiver (7') with a combining point (13) and an outlet for the charge air being connected to the combining point (13).

4. Charge-air cooling according to one of claims 1 to 3, **characterised in that** the first charge-air cooler (6) and the second charge-air cooler (6') are designed to be mirror-symmetrical.

5. Charge-air cooling according to one of claims 1 to 4, **characterised in that** the two flow branches (I, II) each conduct identical quantities of charge air.

6. Charge-air cooling according to one of claims 2 to 5, **characterised in that** the two flow branches (I, II) are each approximately the same length from the branch point (8) inside the air receiver (7) of the first charge-air cooler (6) to the combining point (13) inside the air receiver (7') of the second charge-air cooler (6').

7. Charge-air cooling according to one of claims 2 to 6, **characterised in that** the branch point (8) inside the air receiver (7) of the first charge-air cooler (6) and/or the combining point (13) inside the air receiver (7') of the second charge-air cooler (6') is/are provided with a controllable element.

8. Charge-air cooling according to one of claims 1 to 7, **characterised in that** the two flow branches (I, II) extending between the two charge-air coolers (6, 6') are designed at least partially as a rigid double tube, the two charge-air coolers (6, 6') and the rigid double tube each being connected together by means of flexible pressure hoses.

9. Charge-air cooling according to one of claims 1 to 8, **characterised in that** the two charge-air coolers (6, 6') are arranged in the engine compartment on either side of the multi-cylinder internal combustion engine (1).

10. Charge-air cooling according to one of claims 1 to 9, **characterised in that**, in both charge-air coolers (6, 6'), the cooling pass (9, 9') is arranged on the side directed towards the internal combustion engine (1), while the bypass (10, 10') is arranged on the side directed away from the internal combustion engine (1).

11. Charge-air cooling according to one of claims 3 to 10, **characterised in that** the second charge-air cooler (6') is provided in the region of the air receiver (7') with a pressure sensor.

## Revendications

1. Refroidissement de l'air de suralimentation dans un moteur à combustion interne à plusieurs cylindres présentant un turbocompresseur, l'air de suralimentation étant guidé vers deux refroidisseurs d'air de suralimentation (6, 6') séparé,
**caractérisé en ce que** le premier refroidisseur d'air de suralimentation (6) divise l'air de suralimentation en deux courants (I, II), refroidit effectivement le premier des deux courants (I) et laisse passer le second des deux courants (II) de manière essentiellement non refroidie, et les deux courants étant amenés ensuite au second refroidisseur d'air de suralimentation (6') qui laisse passer le premier des deux courants (I) de manière essentiellement non refroidie, refroidit effectivement le second des deux courants (II) et réunit ensuite les deux courants (I, II).

2. Refroidissement de l'air de suralimentation selon la revendication 1, **caractérisé en ce que** le premier refroidisseur d'air de suralimentation (6) présente une admission pour l'air de suralimentation, à laquelle se raccorde un caisson à air (7) avec un point d'embranchement (8), le premier courant (I) passant après le point d'embranchement (8) par une passe de refroidissement (9), le second courant (II) passant après le point d'embranchement (8) par une dérivation (10) et les deux courants (I, II) étant guidés sur ce vers deux sorties séparées de la passe de refroidissement (9) et de la dérivation (10).

3. Refroidissement de l'air de suralimentation selon la revendication 1 ou 2, **caractérisé en ce que** le second refroidisseur d'air de suralimentation (6') présente deux admissions séparées pour les deux courants (I, II), auxquelles se raccordent une dérivation (10') et une passe de refroidissement (9'), le premier courant (I) passant par la dérivation (10'), le second courant (II) par la passe de refroidissement (9'), les deux courants (I, II) étant guidés sur ce vers un caisson à air (7') avec un point de réunion (13) et une sortie pour l'air de suralimentation se raccordant au point de réunion (13).

4. Refroidissement de l'air de suralimentation selon l'une des revendications 1 à 3, **caractérisé en ce que** le premier refroidisseur d'air de suralimentation (6) et le second refroidisseur d'air de suralimentation (6') sont réalisés de manière symétrique l'un par rapport à l'autre.

5. Refroidissement de l'air de suralimentation selon l'une des revendications 1 à 4, **caractérisé en ce que** les deux courants (I, II) entraînent respectivement des quantités d'air de suralimentation identiques.

6. Refroidissement de l'air de suralimentation selon l'une des revendications 2 à 5, **caractérisé en ce que** les deux courants (I, II) sont respectivement à peu près de longueur identique du point d'embranchement (8) à l'intérieur du caisson à air (7) du premier refroidisseur d'air de suralimentation (6) au point de réunion (13) à l'intérieur du caisson à air (7') du second refroidisseur d'air de suralimentation (6').

7. Refroidissement de l'air de suralimentation selon l'une des revendications 2 à 6, **caractérisé en ce que** le point d'embranchement (8) à l'intérieur du caisson à air (7) du premier refroidisseur d'air de suralimentation (6) et/ou le point de réunion (13) à l'intérieur du caisson à air (7') du second refroidisseur d'air de suralimentation (6') sont équipés d'un élément pouvant être commandé.

8. Refroidissement de l'air de suralimentation selon l'une des revendications 1 à 7, **caractérisé en ce que** les deux courants (I, II) s'étendant entre les deux refroidisseurs d'air de suralimentation (6, 6') sont réalisés au moins partiellement comme un double tube rigide, les deux refroidisseurs d'air de suralimentation (6, 6') et le double tube rigide étant reliés entre eux respectivement au moyen de flexibles sous pression.

9. Refroidissement de l'air de suralimentation selon l'une des revendications 1 à 8, **caractérisé en ce que** les deux refroidisseurs d'air de suralimentation (6, 6') sont disposés des deux côtés du moteur à combustion interne (1) à plusieurs cylindres dans le compartiment moteur.

10. Refroidissement de l'air de suralimentation selon l'une des revendications 1 à 9, **caractérisé en ce que** pour les deux refroidisseurs d'air de suralimentation (6, 6'), la passe de refroidissement (9, 9') est disposée sur le côté tourné vers le moteur à combustion interne (1), alors que la dérivation (10, 10') est disposée sur le côté éloigné du moteur à combustion interne (1).

11. Refroidissement de l'air de suralimentation selon l'une des revendications 3 à 10, **caractérisé en ce que** le second refroidisseur d'air de suralimentation (6') porte dans la zone du caisson à air (7'), un capteur de pression.
